# FASCICULE DE BREVET EUROPEEN

(11) **EP 2 864 719 B1**
(45) Date de publication et mention de la délivrance du brevet: **01.06.2016**
(21) Numéro de dépôt: 13727256.3
(22) Date de dépôt: 03.05.2013
(51) Int. Cl.: F24J 2/54, F24J 2/14, H01L 31/042

(54) **SYSTÈME DE MOUVEMENT DE ROTATION D'UN SUIVEUR SOLAIRE ET DISPOSITIF DE SUIVI SOLAIRE COMPORTANT UN TEL SYSTÈME**
SYSTEM ZUR DREHBEWEGUNG EINES SONNENFOLGERS UND SONNENVERFOLGUNGSVORRICHTUNG MIT SOLCH EINEM SYSTEM
SYSTEM FOR EFFECTING THE ROTATIONAL MOVEMENT OF A SOLAR TRACKER AND SOLAR TRACKING DEVICE COMPRISING SUCH A SYSTEM

(30) Priorité: 22.06.2012 FR 1255954
(43) Date de publication de la demande: 29.04.2015
(73) Titulaire: Exosun, 33650 Martillac (FR)
(72) Inventeur: PAPONNEAU, François, F-33610 Cestas (FR)
(74) Mandataire: Novagraaf Technologies
(86) Numéro de dépôt international: PCT/FR2013/050997
(87) Numéro de publication internationale: WO 2013/190196

(56) Documents cités:
- WO-A2-2012/056067
- CN-U- 201 992 869
- FR-A1- 2 516 220
- KR-A- 20090 118 703
- US-A- 5 169 456
- US-A1- 2008 308 091

## Description

L'invention concerne un système de mise en mouvement de rotation d'un suiveur solaire autour d'un axe de rotation prédéterminé, en particulier au sein d'un dispositif de suivi solaire comportant des moyens de traitement d'un rayonnement solaire montés sur un suiveur solaire lui-même monté mobile à rotation sur un bâti.

Les dispositifs de suivi solaire, comme celui illustré à la figure 8 ou dans les documents CN201992869 et FR2516220, comportent, monté mobile à rotation sur un bâti 62 autour d'un axe 63, un suiveur solaire 60 sur lequel est montée une série de moyens de traitement du rayonnement solaire 61. Afin de réaliser une mise en mouvement de rotation autour de l'axe 63 du suiveur solaire 60, le dispositif de suivi solaire comporte, en outre, un système 10 de mise en mouvement de rotation comprenant un arceau 20 fixé au suiveur solaire 60 et entraîné par un moyen d'entraînement 52 commandé par un arbre de transmission 51. Conventionnellement, l'arceau 20 est réalisé, tout comme le moyen d'entraînement 52, dans des matériaux métalliques. Le contact entre le métal du moyen d'entraînement 52 et le métal de l'arceau 20 conduit à des phénomènes de couinement dus aux vibrations générées au niveau du contact. De plus, ces vibrations sont transmises directement au suiveur solaire 60 par l'arceau 20 via des pattes de fixation 30 permettant la fixation de l'arceau 20 au suiveur solaire 60. Afin de réduire ces phénomènes de couinement, et donc les vibrations, un graissage est réalisé pour réduire le frottement au
niveau du contact entre l'arceau 20 et le moyen d'entraînement 52. Toutefois, la réalisation d'un tel graissage implique des phases de maintenance lourdes d'un champ comportant des centaines, voir des milliers, de dispositifs de suivi solaire ainsi équipés d'un arceau 20 et d'un moyen d'entraînement 52 dudit arceau 20. En effet, la graisse utilisée pour le graissage disparait de manière rapide sous l'effet des conditions climatiques, en particulier des intempéries qui lavent cette dernière.

Un but de l'invention est de fournir un système de mise en mouvement de rotation d'un suiveur solaire autour d'un axe de rotation qui ne nécessite pas des phases de maintenance tout en permettant de réduire la génération de vibrations qui conduisent à des phénomènes de couinement.

A cette fin, il est prévu, selon l'invention, un système de mise en mouvement de rotation d'un suiveur solaire autour d'un axe de rotation comportant :
- un arceau monté sur le suiveur solaire et comprenant une crémaillère ; et,
- une vis sans fin coopérant avec la crémaillère afin de réaliser le mouvement de rotation,
la crémaillère comportant une denture en matière plastique et l'arceau comprenant des moyens amortisseurs de liaison avec le suiveur solaire.

Le fait que la crémaillère comporte une denture en matière plastique permet, d'une part, d'éviter un contact métal-métal comme dans l'art antérieur, mais un contact métal-plastique qui présente un coefficient de frottement très faible, ce qui conduit à une réduction de la génération de vibrations cause des phénomènes de couinement. D'autre part, l'utilisation d'une denture plastique pour la crémaillère permet de ne pas prévoir un graissage, ce qui permet de supprimer les phases de maintenance à ce niveau. Enfin, l'utilisation de moyens amortisseurs de liaison entre l'arceau et le suiveur solaire permet de supprimer la transmission des vibrations résiduelles entre l'arceau et ledit suiveur.

Avantageusement, mais facultativement, le système de mise en mouvement de rotation d'un suiveur solaire selon l'invention comporte au moins l'une des caractéristiques techniques suivantes :
- l'arceau comporte un profilé courbe sur lequel est positionnée une série de pièces en matière plastique formant la crémaillère ;
- le profilé courbe comporte une goulotte agencée de sorte à recevoir la série de pièces en matière plastiques ;
- la crémaillère est montée à coulissement dans la goulotte, l'arceau comportant en outre des moyens de butée d'un maintien en position dans la goulotte de la crémaillère ;
- les pièces en matière plastique comportent des pattes présentant une forme biseautée au niveau d'une extrémité libre agencée de sorte à coopérer en appui avec une paroi de la goulotte ;
- la crémaillère est montée en position par clippage dans la goulotte ;
- la crémaillère est aménagée sur un flanc de l'arceau compris dans un plan perpendiculaire à l'axe de rotation ;
- les moyens amortisseurs de liaison comportent des plots amortisseurs interposés entre l'arceau et le suiveur solaire ;
- les plots amortisseur sont réalisés en un élastomère de type EPDM (Ethylène-Propylène-Diène Monomère) ;
- la matière plastique de la denture comporte des fibres pour la renforcer ;

Il est aussi prévu, selon l'invention, un dispositif de suivi solaire comportant des moyens de traitement d'un rayonnement solaire montés sur un suiveur solaire lui-même monté mobile à rotation sur un bâti et comportant en outre un système de mise en mouvement de rotation présentant au moins l'une des caractéristiques précédentes.

D'autres caractéristiques et avantages de l'invention apparaitront lors de la description ci-après d'un mode de réalisation de l'invention. Aux dessins annexées :
- la figure 1 est une vue de face d'un arceau d'un système de mise en mouvement de rotation d'un suiveur solaire selon l'invention ;
- la figure 2 est une vue partielle du détail II de la figure 1 ;
- la figure 3 est une vue tridimensionnelle partielle du détail II de la figure 2 ;
- la figure 4 est une vue partielle du détail IV de la figure 1 ;
- la figure 5 est une vue en coupe selon V-V du détail de la figure 4 ;
- la figure 6 est une vue partielle tridimensionnelle illustrant le montage de la denture sur l'arceau dans le système de mise en mouvement de rotation d'un suiveur solaire de la figure 1 ;
- la figure 7 est une vue en coupe du système de mise en mouvement de rotation d'un suiveur solaire selon l'invention ; et
- la figure 8 est une vue tridimensionnelle d'un dispositif de suivi solaire comportant un système de mise en mouvement de rotation d'un suiveur solaire.

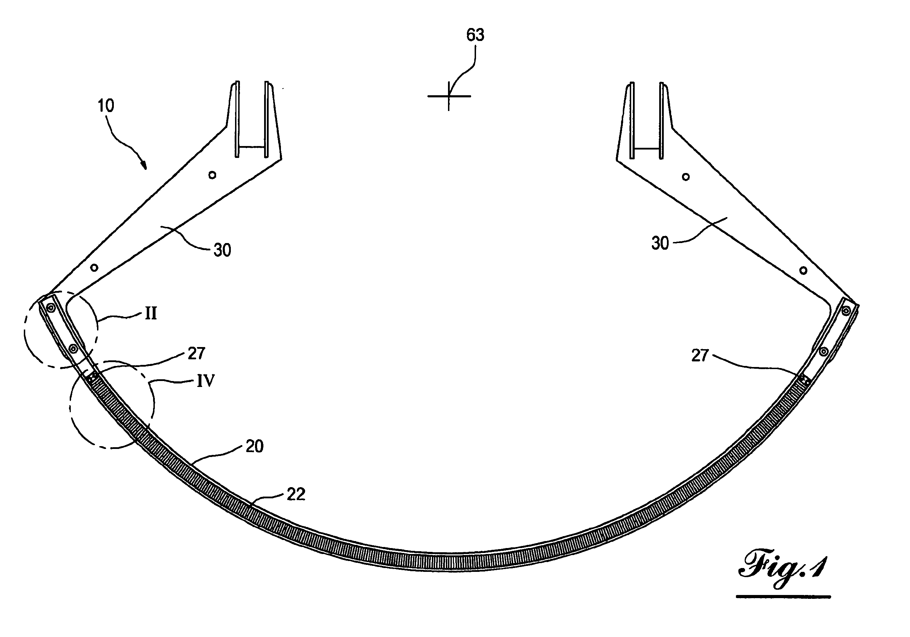

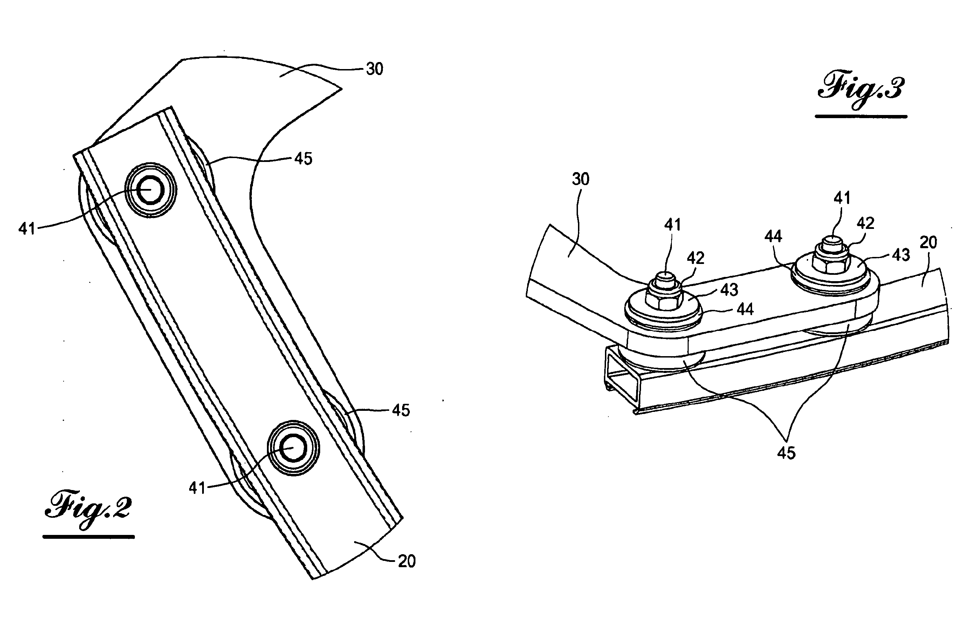

En référence à la figure 1, le système 10 de mise en mouvement de rotation d'un suiveur solaire selon l'invention comporte un arceau 20 formant un arc-de-cercle dont le centre est sur l'axe de rotation 63. L'arceau 20 est fixé à chacune de ses extrémités à une pièce de liaison 30 permettant de relier l'arceau 20 à l'ossature du suiveur solaire 60. La liaison entre chacune des extrémités de l'arceau 20 avec les pièces de liaison 30 est illustrée en détails aux figures 2 et 3. Chacune des extrémités de l'arceau 20 présente des orifices traversant l'arceau 20. Ici, les orifices sont au nombre de deux. D'autre part, ils sont perpendiculaires à un plan de l'arceau et viennent, lors d'un montage de l'arceau 20 sur les pièces de liaison 30 en regard d'orifices équivalents situés à une extrémité de chacune des pièces de liaison 30. Lors du montage de l'arceau 20 sur les pièces de liaison 30, une vis 41 est introduite dans chacun des orifices traversant de l'arceau 20, puis un premier moyen d'amortissement 45 est positionné sur chacune des vis 41, puis la pièce de liaison 30 est mise en place sur les deux vis 41 de sorte à prendre en sandwich le premier moyen d'amortissement 45 entre la pièce de liaison 30 et l'arceau 20. Ensuite, sur chacune des vis 41 est enfilé un deuxième moyen d'amortissement 44, puis une rondelle 43, l'ensemble de l'empilement ainsi réalisé étant ensuite serré à l'aide d'un écrou 42 venant se visser sur un filetage situé à l'extrémité de chacune des vis 41. Les premiers moyens d'amortissement 45 et les deuxièmes moyens d'amortissement 44 sont de type "Silentbloc". En particulier, les premiers moyens d'amortissement 45 et deuxièmes moyens d'amortissement 44 se présentent sous la forme de rondelles ou de plots réalisés en élastomère de type EPDM (Ethylène-Propylène-Diène Monomère). L'avantage d'utiliser un élastomère de type EPDM permet d'obtenir des premiers moyens d'amortissement 45 et les deuxièmes moyens d'amortissement 44 qui résistent aux conditions extérieures, c'est-à-dire en particulier à l'eau et aux rayons ultra-violets dus au rayonnement solaire. Une fois le montage réalisé, la pièce de liaison 30 est, du point de vue vibratoire, isolée de l'arceau 20 à l'aide des premiers 45 et deuxièmes 44 moyens d'amortissement. D'autres élastomères peuvent être utilisés à cette fin.

En variante de réalisation, les premier 45 et deuxième 44 moyens d'amortissement forment une seule pièce de sorte que, lors d'un montage, la pièce est introduite à travers l'orifice des pièces de liaison 30. D'autres moyens d'amortissement peuvent être utilisés.

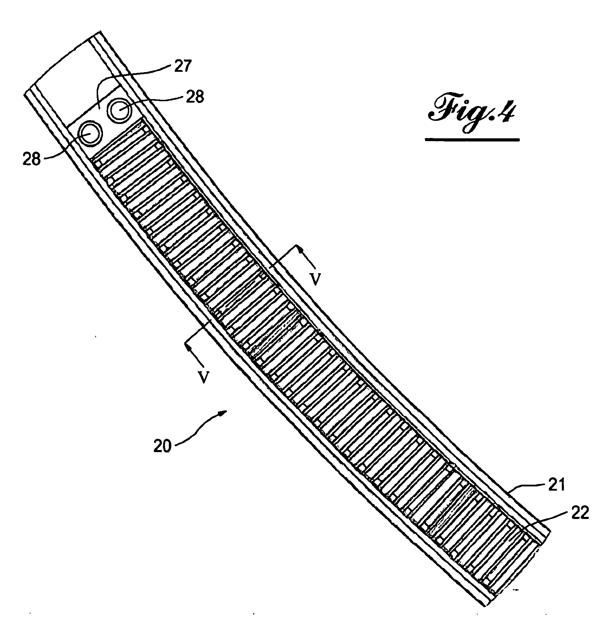

En référence aux figures 4 à 6, nous allons maintenant décrire plus en détails l'arceau 20 du système 10 de mise en mouvement de rotation selon l'invention. L'arceau 20 comporte un profilé 21. Le profilé 21 est réalisé en un matériau métallique, de préférence en aluminium. Afin de l'alléger au maximum, le profilé 21 est creux et présente en section une forme rectangulaire dont les petits côtés forment respectivement une périphérie radialement externe et une périphérie radialement interne de l'arceau 20. Les petits côtés sont reliés l'un à l'autre par des grands côtés formant des flancs de l'arceau 20. Le profilé 21 est courbe. L'un 210 des flancs de l'arceau 20 comporte une goulotte 29 délimitée au niveau de la périphérie radialement externe et de la périphérie radialement interne de l'arceau 20 par des parois 23 s'étendant en regard l'une de l'autre et en saillie du flan 210. De plus, les parois 23 sont inclinées l'une vers l'autre afin de former des moyens de retenue d'une crémaillère 22 dans la goulotte 29. La denture 22 est donc rapportée sur le profilé 21 de l'arceau 20 par insertion de cette dernière dans la goulotte 29. La crémaillère 22 est réalisée en matière plastique, éventuellement renforcée par des fibres afin de former un matériau plastique composite. La crémaillère 22 peut être monobloc. Toutefois, dans un mode préféré de réalisation, la crémaillère 22 est composée d'une série de pièces plastiques qui sont mises bout à bout dans la goulotte 29.

La crémaillère 22 comporte sur une face une denture 26 sensiblement perpendiculaire à un axe longitudinal de la crémaillère 22. De plus, la crémaillère 22 comprend, sur une face destinée à venir en regard du flanc 210 du profilé 21, une nervure centrale 25 ainsi que des pattes latérales 24 situées de part et d'autre de la nervure centrale 25. Les pattes 24 s'étendent latéralement en saillie de la crémaillère 22. Les pattes 24 sont continues et s'étendent le long de la crémaillère 22. En variante, les pattes 24 sont discontinues. D'autre part, les pattes 24 comportent une forme biseautée agencée de sorte à ce que, lors d'un appui d'une des pattes 24 sur la paroi 23 correspondante de la goulotte 29, la forme biseautée de la patte 24 épouse la forme de la paroi 23 inclinée. Ainsi, lors d'un montage de la crémaillère 22 dans la goulotte 29 du profilé 21 de l'arceau 20, celles-ci coopèrent avec les parois latérales 23 de la goulotte 29 de sorte à maintenir dans la goulotte 29 la crémaillère 22. Dans un premier mode de réalisation, la crémaillère 22 est montée à coulissement dans la goulotte 29. Un tel montage permet de positionner correctement la crémaillère 22 ou la série de pièces plastiques formant la crémaillère 22 sur l'arceau 20 du système 10 de mise en mouvement de rotation d'un suiveur solaire selon l'invention. Une fois le positionnement de la crémaillère effectué, des moyens formant butée 27 sont positionnés au sein de la goulotte 29 de sorte à bloquer en position la crémaillère 22 sur le profilé 21 de l'arceau 20. Les butées 27 sont immobilisées en position à l'aide des moyens de fixation 28, ici des rivets. En variante, les moyens formant butée 27 sont agencée de sorte à être retenus par les parois latérales 23 de la goulotte 29. Dans une variante de réalisation, la crémaillère 22 ou la série de pièces plastiques formant la crémaillère 22 présentent des pattes latérales 24 agencées de sorte à permettre un clippage de la crémaillère 22 dans la goulotte 29. D'autres moyens de blocage de la crémaillère 22 dans la goulotte 29 sont possibles, comme le rivetage ou le vissage. Lors de la mise en place des moyens formant butée 27, la crémaillère 22 est comprimée sur elle-même entre lesdits moyens formant butées de sorte à ce que l'une des pattes 24 située au niveau de la périphérie radialement externe de l'arceau 20 vienne en appui sur la paroi 23 correspondante de la goulotte 29, la forme biseautée de la patte 24 assurant, par coopération avec la paroi 23 correspondante, un maintien sans mouvement de la crémaillère 22 dans la goulotte 29.

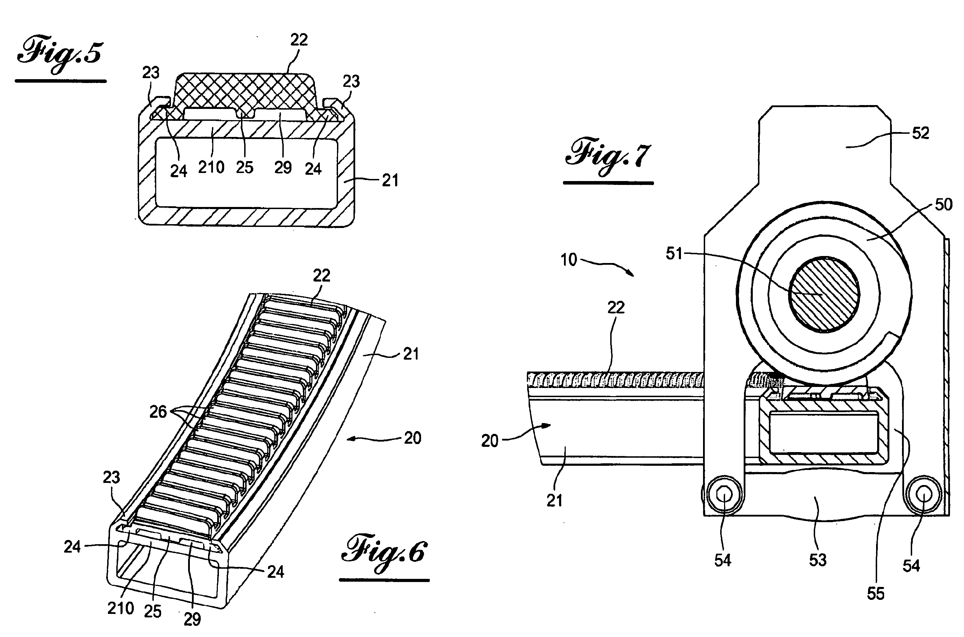

En référence à la figure 7, le système 10 de mise en mouvement de rotation selon l'invention comporte des moyens d'entraînement de la crémaillère 22 de l'arceau 20. Ces moyens d'entraînement comportent une cage 52 dans laquelle est aménagé un logement permettant de recevoir une vis sans fin 50. La vis sans fin 50 est reçue mobile à rotation autour de son axe dans ledit logement de la cage 52 et est entraîné par un arbre 51 dans ce mouvement de rotation. Une fois montée à rotation dans la cage 52, la vis sans fin 50, présentant un filetage externe, déborde dans un passage adjacent 55. Le passage 55 est en forme de U et ouvert sur une partie inférieure de la cage 52. Ce passage 55 est destiné à recevoir l'arceau 20, de sorte que la crémaillère 22 vienne coopérer avec le filetage externe de la vis sans fin 50. Afin d'assurer cette coopération, la cage 52 présente un couvercle 53 fixé de manière amovible sur chacune des extrémités 54 des branches du U délimitant le passage 55. Le couvercle 53, une fois mis en place sur la cage 52, permet d'éviter tout désengagement de la denture 26 de la crémaillère 22 de du filetage de la vis sans fin 50 pendant toute la durée du mouvement relatif entre la cage 52 et l'arceau 20. En effet, avant que le désengagement ne se produise, le couvercle 53 vient en appui sur le flanc opposé au flanc 210 du profilé 21, assurant alors la coopération entre la crémaillère 22 de l'arceau 20 avec la vis sans fin 50 La vis sans fin 50 est réalisée en acier inoxydable par exemple.

Le fait d'utiliser une crémaillère en matière plastique venant au contact d'une vis sans fin métallique, en particulier en acier inoxydable, permet de réduire les frottements et donc les vibrations qui génèrent les phénomènes de couinement précédemment décrits tout en évitant de prévoir un graissage de la crémaillère 22 et de la vis sans fin 50. Ainsi, d'éventuelles phases de maintenance (graissage) sont supprimées. Toutefois, le contact entre la vis sans fin et la crémaillère 22 génère cependant des vibrations résiduelles qui seront absorbées par les premiers 45 et deuxièmes 44 moyens d'amortissement situés entre l'arceau 20 et les pièces de montage 30 de l'arceau sur le suiveur solaire 60.

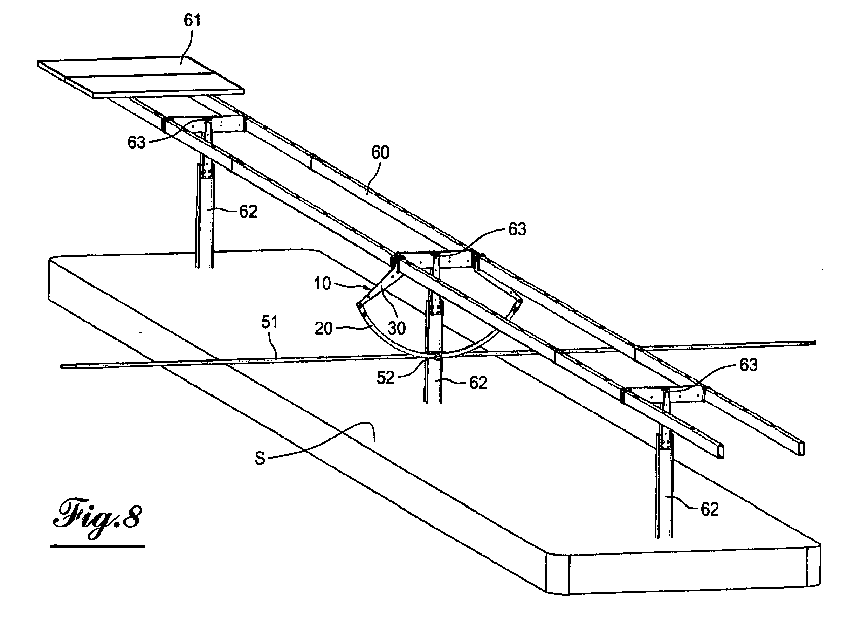

Un autre avantage de monter une crémaillère en matière plastique dans une goulotte 29 aménagée sur un flanc 210 de l'arceau 20 permet de rattraper des jeux de montage, qui peuvent être importants, du dispositif de suivi solaire, comme celui illustré à la figure 8, comportant un système 10 de mise en mouvement de rotation d'un suiveur solaire selon l'invention. Ceci permet un montage et une mise en place extrêmement simplifiés et rapides du dispositif de suivi solaire sur son site S tout en assurant une précision optimale du suivi solaire lors d'un fonctionnement du dispositif de suivi solaire comportant le système 10 de mise en mouvement de rotation d'un suiveur solaire selon l'invention.

Bien entendu, il est possible d'apporter à l'invention de nombreuses modifications sans pour autant sortir du cadre de celle-ci. Par exemple, la crémaillère 22 peut être positionnée sur une tranche de l'arceau 20, en particulier sur une tranche périphérique radialement externe.

## Revendications

1. Système (10) de mise en mouvement de rotation d'un suiveur solaire (60) autour d'un axe de rotation (63) comportant :
- un arceau (20) montable sur le suiveur solaire (60) et comprenant une crémaillère (22) ; et,
- une vis sans fin (50) coopérant avec la crémaillère (22) afin de réaliser le mouvement de rotation,
**caractérisé en ce que** la crémaillère (22) comporte une denture (26) en matière plastique et l'arceau (20) comprend des moyens amortisseurs (44,45) de liaison avec le suiveur solaire.

2. Système de mise en mouvement de rotation selon la revendication 1, **caractérisé en ce que** l'arceau (20) comporte un profilé (21) courbe sur lequel est positionnée une série de pièces en matière plastique formant la crémaillère (22).

3. Système de mise en mouvement de rotation selon la revendication 2, **caractérisé en ce que** le profilé (21) courbe comporte une goulotte (29) agencée de sorte à recevoir la série de pièces en matière plastique.

4. Système de mise en mouvement de rotation selon la revendication 3, **caractérisé en ce que** la série de pièces en matière plastique est montée à coulissement dans la goulotte, l'arceau comportant en outre des moyens de butée (27) d'un maintien en position dans la goulotte de la série de pièces en matière plastique.

5. Système de mise en mouvement de rotation selon la revendication 3 ou 4, **caractérisé en ce que** les pièces en matière plastiques comporte des pattes (24) présentant une forme biseautée au niveau d'une extrémité libre agencée de sorte à coopérer en appui avec une paroi (23) de la goulotte (29).

6. Système de mise en mouvement de rotation selon la revendication 3, **caractérisé en ce que** la série de pièces en matière plastique est montée en position par clippage dans la goulotte.

7. Système de mise en mouvement de rotation selon l'une des revendications 1 à 6, **caractérisé en ce que** la crémaillère (22) est aménagée sur un flanc (210) de l'arceau (20) compris dans un plan perpendiculaire à l'axe de rotation (63).

8. Système de mise en mouvement de rotation selon l'une des revendications 1 à 7, **caractérisé en ce que** les moyens amortisseurs (44,45) de liaison comportent des plots amortisseurs (45) interposés entre l'arceau et le suiveur solaire.

9. Système de mise en mouvement de rotation selon l'une des revendications 1 à 8, **caractérisé en ce que** la matière plastique de la denture comporte des fibres pour la renforcer.

10. Dispositif de suivi solaire comportant des moyens de traitement d'un rayonnement solaire (61) montables sur un suiveur solaire (60), le suiveur solaire étant monté mobile en rotation sur un bâti (62), **caractérisé en ce qu'**il comporte en outre un système (10) de mise en mouvement de rotation du suiveur solaire selon l'une des revendications 1 à 9.

## Patentansprüche

1. System (10) zur Drehbewegung eines Sonnenfolgers (60) um eine Drehachse (63), umfassend:
- einen Bügel (20), der auf dem Sonnenfolger (60) montierbar ist und eine Zahnstange (22) umfasst; und
- eine Schnecke (50), die mit der Zahnstange (22) zusammenwirkt, um die Drehbewegung durchzuführen,
**dadurch gekennzeichnet, dass** die Zahnstange (22) eine Zahnung (26) aus Kunststoff umfasst, und der Bügel (20) Dämpfungsmittel (44, 45) zur Verbindung mit dem Sonnenfolger umfasst.

2. System zur Drehbewegung nach Anspruch 1, **dadurch gekennzeichnet, dass** der Bügel (20) ein gekrümmtes Profil (21) umfasst, auf dem eine Reihe von Kunststoffteilen positioniert ist, die die Zahnstange (22) bilden.

3. System zur Drehbewegung nach Anspruch 2, **dadurch gekennzeichnet, dass** das gekrümmte Profil (21) eine Rinne (29) umfasst, die derart angeordnet ist, dass sie die Reihe von Kunststoffteilen aufnimmt.

4. System zur Drehbewegung nach Anspruch 3, **dadurch gekennzeichnet, dass** die Reihe von Kunststoffteilen gleitend in der Rinne montiert ist, wobei der Bügel ferner Anschlagmittel (27) zum Halten der Reihe von Kunststoffteilen in der Rinne in Position umfasst.

5. System zur Drehbewegung nach Anspruch 3 oder 4, **dadurch gekennzeichnet, dass** die Kunststoffteile Laschen (24) umfassen, die eine abgeschrägte Form im Bereich eines freien Endes aufweisen, das derart angeordnet ist, dass es mit einer Wand (23) der Rinne (29) durch Auflage zusammenwirkt.

6. System zur Drehbewegung nach Anspruch 3, **dadurch gekennzeichnet, dass** die Reihe von Kunststoffteilen durch Einrasten in der Rinne in Position montiert ist.

7. System zur Drehbewegung nach einem der Ansprüche 1 bis 6, **dadurch gekennzeichnet, dass** die Zahnstange (22) auf einer Seite (210) des Bügels (20), die in einer Ebene senkrecht auf die Drehachse (63) enthalten ist, angeordnet ist.

8. System zur Drehbewegung nach einem der Ansprüche 1 bis 7, **dadurch gekennzeichnet, dass** die Dämpfungsmittel (44, 45) zur Verbindung Dämpfungsstücke (45) umfassen, die zwischen dem Bügel und dem Sonnenfolger angeordnet sind.

9. System zur Drehbewegung nach einem der Ansprüche 1 bis 8, **dadurch gekennzeichnet, dass** der Kunststoff der Zahnung Fasern zu seiner Verstärkung umfasst.

10. Sonnenverfolgungsvorrichtung, umfassend Mittel zur Bearbeitung einer Sonnenstrahlung (61), die auf einem Sonnenfolger (60) montierbar sind, wobei der Sonnenfolger drehbeweglich auf einem Gehäuse (62) montiert ist, **dadurch gekennzeichnet, dass** sie ferner ein System (10) zur Drehbewegung des Sonnenfolgers nach einem der Ansprüche 1 bis 9 umfasst.

## Claims

1. System (10) for moving a solar tracker in rotation (60) about an axis of rotation (63) comprising:
- an arch (20) mountable on the solar tracker (60) and comprising a rack (22); and,
- a worm screw (50) cooperating with the rack (22) in order to produce the rotational movement,
**characterized in that** the rack (22) comprises teeth (26) made of plastic material and the arch (20) comprises damping means (44, 45) linking with the solar tracker.

2. Rotational movement system according to Claim 1, characterized it that the arch (20) comprises a curved profile member (21) on which is positioned a series of parts made of plastic material forming the rack (22).

3. Rotational movement system according to Claim 2, **characterized in that** the curved profile member (21) comprises a trunking arranged in such a way as to receive the series of parts made of plastic material.

4. Rotational movement system according to Claim 3, **characterized in that** the series of parts made of plastic material is mounted to slide in the trunking (29), the arch further comprising abutment means (27) for keeping the series of parts made of plastic material in position in the gutter.

5. Rotational movement system according to Claim 3 or 4, **characterized in that** the parts made of plastic material comprise tabs (24) having a bevelled form at a free end arranged in such a way as to cooperate by bearing with a wall (23) of the gutter (29).

6. Rotational movement system according to Claim 3, **characterized in that** the series of parts made of plastic material is mounted in position by clipping into the gutter.

7. Rotational movement system according to one of Claims 1 to 6, **characterized in that** the rack (22) is formed on a flank (210) of the arch (20) contained in a plane at right angles to the axis of rotation (63).

8. Rotational movement system according to one of Claims 1 to 7, **characterized in that** the linking damping means (44, 45) comprise damping blocks (45) interposed between the arch and the solar tracker.

9. Rotational movement system according to one of Claims 1 to 8, **characterized in that** the plastic material of the teeth includes fibres to reinforce it.

10. Solar tracking device comprising solar radiation processing means (61) mountable on a solar tracker (60), the solar tracker being mounted to move in rotation on a frame (62), **characterized in that** it further comprises a system (10) for moving the solar tracker in rotation according to one of Claims 1 to 9.
